# EUROPÄISCHE PATENTANMELDUNG

(11) **EP 3 557 284 A2**
(43) Veröffentlichungstag der Anmeldung: **23.10.2019**
(21) Anmeldenummer: 19165677.6
(22) Anmeldetag: 28.03.2019
(51) Int. Cl.: G01S 17/00, G01S 7/481, G01S 17/42, G01S 17/89, G02B 27/46

(54) **OPTOELEKTRONISCHER SENSOR UND VERFAHREN ZUR ABSTANDSBESTIMMUNG**

(30) Priorität: 20.04.2018 DE 102018109544
(71) Anmelder: Sick AG, 79183 Waldkirch (DE)
(72) Erfinder: Gimpel, Hartmut, 79194 Gundelfingen (DE)

(57) **Zusammenfassung**

Es wird ein optoelektronischer Sensor (10) zur Erfassung und Abstandsbestimmung von Objekten in einem Überwachungsbereich (16) angegeben, der einen Lichtsender (12) zum Aussenden von moduliertem Sendelicht (18), einen Lichtempfänger (26) mit einer Vielzahl von SPAD-Lichtempfangselementen (26a) zum Erzeugen mindestens eines Empfangssignals aus dem von Objekten in dem Überwachungsbereich (16) remittierten Sendelicht (20), eine dem Lichtempfänger (26) vorgeordnete Empfangsoptik (22) mit einer Blende (24) sowie eine Steuer- und Auswertungseinheit (28) aufweist, die dafür ausgebildet ist, aus Eigenschaften des Empfangssignals und des modulierten Sendelichts (18) eine Lichtlaufzeit und daraus einen Abstandswert zu bestimmen. Dabei weist die Blende (24) mehrere voneinander beabstandete Blendenöffnungen (24a) auf.

## Beschreibung

Die Erfindung betrifft einen optoelektronischen Sensor zur Erfassung und Abstandsbestimmung von Objekten in einem Überwachungsbereich nach dem Oberbegriff von Anspruch 1 beziehungsweise 11.

Mit einigen optoelektronischen Sensoren, zu denen ein Laserscanner und eine 3D-Kamera zählen, wird auch eine Tiefeninformation erfasst. So entstehen dreidimensionale Bilddaten, die auch als Entfernungsbild oder Tiefenkarte bezeichnet werden. Die zusätzliche Entfernungsdimension lässt sich in einer Vielzahl von Anwendungen nutzen, um mehr Informationen über Objekte in der erfassten Szenerie zu gewinnen und so verschiedene Aufgaben zu lösen.

Zur Ermittlung der Tiefeninformationen sind verschiedene Verfahren bekannt. Bei der hier betrachteten Lichtlaufzeitmessung (TOF, Time of Flight) wird eine Szene mit gepulstem oder amplitudenmoduliertem Licht beleuchtet. Der Sensor misst zu mehreren Orten entsprechend mehreren Messpunkten die Laufzeit des reflektierten Lichtes. In einem Pulsverfahren werden dafür Lichtpulse ausgesandt und die Dauer zwischen Sende- und Empfangszeitpunkt gemessen. In einem Phasenverfahren erfolgt eine periodische Amplitudenmodulation und Messung des Phasenversatzes zwischen Sende- und Empfangslicht.

In einer 3D-Kamera wird die Laufzeit für jeweilige Pixel oder Pixelgruppen gemessen. Beispielsweise sind in einem Pulsverfahren TDCs zur Laufzeitmessung mit den Pixeln verbunden oder sogar gemeinsam mit den Pixeln auf einem Wafer integriert. Eine Technologie für die Gewinnung von dreidimensionalen Bilddaten mit einem Phasenverfahren ist die Photomischdetektion (PMD).

In einem Laserscanner überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und so entstehen nach einer Abtastperiode Bilddaten mit Abstandswerten in Polarkoordinaten. Durch zusätzliche Variation oder Mehrstrahlabtastung im Elevationswinkel werden dreidimensionale Bilddaten aus einem Raumbereich erzeugt. In den meisten Laserscannern wird die Abtastbewegung durch einen Drehspiegel erreicht. Es ist aber auch bekannt, stattdessen den gesamten Messkopf mit einem oder mehreren Lichtsendern und Lichtempfängern rotieren zu lassen, wie dies beispielsweise in DE 197 57 849 B4 beschrieben ist.

Die Nachweisempfindlichkeit einfacher Photodioden genügt in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung vorgespannt, so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Dabei werden schon in der Lawinenphotodiode Verstärkungsfaktoren von 10⁵...10⁶ erreicht. Die Lawinenphotodiode zählt wie der namensgebende Geigerzähler Einzelereignisse. Lawinenphotodioden im Geiger-Modus werden auch als SPAD (Single-Photon Avalanche Diode) bezeichnet.

Geiger-APDS oder SPADs sind also sehr schnelle, hochempfindliche Photodioden auf Halbleiterbasis. Ein Nachteil der hohen Empfindlichkeit ist, dass nicht nur ein Nutzlichtphoton, sondern auch ein schwaches Störereignis durch Fremdlicht, optisches Übersprechen oder Dunkelrauschen den Lawinendurchbruch auslösen kann. Fremdlicht ist also für SPADs äußerst unvorteilhaft, weil es zu hohen Strömen, damit einer hohen Leistungsaufnahme und starken Wärmeentwicklung führt. Außerdem tragen Störereignisse mit dem gleichen relativ starken Signal zum Messergebnis bei wie das empfangene Nutzlicht und sind auch aus dem Empfangssignal heraus nicht vollständig von Nutzlicht unterscheidbar. Das verschlechtert das Signal-Rausch-Verhältnis und verringert damit Messgenauigkeit und Reichweite.

Eine weitere Besonderheit ist, dass eine SPAD-Zelle nach einer Lawine für eine Totzeit von ca. 5 bis 100 ns unempfindlich wird und so lange für weitere Messungen ausfällt. Um dies zu kompensieren, werden Array-Anordnungen gebildet, um eine Vielzahl von SPAD-Ereignissen gemeinsam statistisch auszuwerten. Dabei gibt es einerseits den Ansatz, das Signal einer Vielzahl von SPAD-Zellen gemeinsam oder zumindest aus großen Gruppen aus dem Bauteil herauszuführen und als analogen Strom beziehungsweise analoge Spannung weiterzuverarbeiten. Andererseits gibt es SPAD-Detektoren, bei denen das Signal jeder einzelnen SPAD-Zelle ausgelesen wird, meist digital als binäres Ereignis, ob die jeweilige SPAD-Zelle ausgelöst hat oder nicht. Das erfordert im Vergleich zu einem gemeinsamen analogen Signal aufwändigere Verbindungsstrukturen.

Im Stand der Technik gibt es verschiedene Vorschläge, mit der Fremdlichtempfindlichkeit von SPAD-Empfängern umzugehen. Es ist natürlich möglich, einen kleinen SPAD-Empfänger mit nur wenigen SPAD-Zellen zu verwenden, dessen kleine Empfangsfläche den Empfangsblickwinkel einschränkt, so dass weniger seitliches Fremdlicht eingefangen wird. Bei wenigen SPAD-Zellen ist es aber schwierig, Störereignisse und Totzeiten durch die Statistik großer Zahlen auszugleichen.

Durch eine Empfangsoptik großer Brennweite oder eine mechanische Blende lässt sich der Empfangsblickwinkel auch optisch einschränken. Eine Empfangsoptik mit großer Brennweite erfordert aber eine große Baulänge. Bei einer Blende bleiben die abgedeckten SPAD-Zellen ungenutzt. Die EP 2 910 969 B1 ergänzt eine sehr schmale Blende mit einem optischen Trichterelement, welches das Licht hinter der Blende homogenisiert und auf die gesamte SPAD-Empfängerfläche verteilt. Das zusätzliche Bauteil erhöht jedoch die Herstellkosten und muss auch justiert werden. Verzichtet man auf die Homogenisierung, so lässt sich die SPAD-Empfängerfläche auch schon durch etwas Abstand zwischen Blende und SPAD-Empfänger besser nutzen. In jedem Fall schließt zwar ein begrenzter Empfangsblickwinkel einen Großteil des Fremdlichts aus, eignet sich aber nur für einen einzigen Messstrahl in einer genau vorgegebenen Richtung.

Prinzipiell ist denkbar, das gesamte Sichtfeld flächenhaft zu beleuchten und jede SPAD-Zelle mit ihrer örtlichen Zuordnung als Blende aufzufassen. Mit einer Flächenbeleuchtung ist aber von vorneherein kein besonders gutes Signal-Rauschverhältnis zu erwarten. In der EP 2 708 914 A1 wird der gepulste Sendelichtstrahl einer Lichtquelle mit einem MEMS-Spiegel in X-Richtung und Y-Richtung über die abzutastende Fläche geführt. Die reflektierten Lichtpulse werden von einer SPAD-Matrix empfangen, von der jeweils nur diejenigen SPADs aktiviert werden, die den aktuell von dem Sendelichtstrahl beleuchteten Bereich beobachten. Zumindest bei hoher Auflösung dauert dabei der Scanvorgang für eine schnelle Bildaufnahme zu lang.

Außerdem ist für derartige elektronische Beschränkungen des Empfangsblickwinkels eine komplexe Anschaltstruktur für die SPAD-Zellen erforderlich. Im Extremfall für volle Flexibilität muss mindestens eine eigene Leitung an jede SPAD-Zelle geführt sein, um beispielsweise individuell eine Vorspannung über oder unter der Durchbruchspannung zu wählen und die jeweilige SPAD-Zelle dadurch zu aktivieren oder zu deaktivieren. Erfolgt die Anschaltung dagegen wie bei Bildsensoren üblich nur zeilen- und spaltenweise, so sind nur rechteckige Gruppen wählbar, die keineswegs ideal einer gewünschten Form zur Erfassung des jeweiligen Empfangslichtstrahls entsprechen.

Die Auswahl der SPAD-Zellen könnte auch erst nachgeordnet in der Bildauswertung erfolgen. Dadurch werden aber zahlreiche SPAD-Zellen ausgelöst, die letztlich gar nicht genutzt werden, und somit hat der SPAD-Empfänger einen unnötig hohen Stromverbrauch und eine große Wärmeentwicklung unter Fremdlichtbelastung.

Die DE 10 2006 013 290 A1 offenbart eine Vorrichtung zur optischen Entfernungsmessung mit getrennt aktivierbaren lichtempfindlichen Flächen, die so geformt sind, dass Licht aus dem Fernbereich auf eine größere aktive Fläche trifft als Licht aus dem Nahbereich, um so den entfernungsabhängigen Energieverlust teilweise auszugleichen. Dabei handelt es sich aber um herkömmliche Lichtempfänger. In der EP 2 475 957 B1 wird ein ähnliches Ergebnis durch Gruppenbildung von SPADs erreicht. Wie schon erläutert, muss dazu aber eine Schaltungsstruktur vorhanden sein, die das gezielte Aktivieren der gewünschten Gruppen zulässt.

Es ist daher Aufgabe der Erfindung, einen Sensor mit SPAD-Lichtempfänger zu verbessern.

Diese Aufgabe wird durch einen optoelektronischen Sensor zur Erfassung und Abstandsbestimmung von Objekten in einem Überwachungsbereich nach Anspruch 1 beziehungsweise 11 gelöst. Der Sensor weist einen Lichtsender auf, der eine dem konkret genutzten Abstandsmessverfahren angepasste Beleuchtung erzeugt. Nach Remission an Objekten in dem Überwachungsbereich wird das derart modulierte Sendelicht in einem Lichtempfänger mit einer Vielzahl von SPAD-Lichtempfangselementen empfangen und unter Berücksichtigung der bekannten Modulation beispielsweise in einem Puls- oder Phasenverfahren die Lichtlaufzeit und damit der Abstand bestimmt. Dem Lichtempfänger ist eine Empfangsoptik mit einer Blende vorgeordnet.

Die Erfindung geht nun von dem Grundgedanken aus, als Blende eine Mehrfachblende mit mehreren voneinander beabstandeten Blendenöffnungen einzusetzen. Dadurch ergeben sich mehrere voneinander beabstandete Empfangsbereiche auf dem SPAD-Lichtempfänger jeweils mit verbesserter Fremdlichtrobustheit.

Die Erfindung hat den Vorteil, dass durch die geringere Fremdlichtempfindlichkeit eine größere Messgenauigkeit und Messreichweite erzielt werden kann. Durch die mehreren Blendenöffnungen können mehrere Messstrahlen verwendet und dadurch zusätzliche Messinformation aus einem größeren Sichtbereich gewonnen werden. Für die Form der Blendenöffnungen besteht praktisch Designfreiheit ohne Rücksicht auf die Komplexität von Schaltungsstrukturen, die sich für eine Verbesserung der Messung im Nahbereich nutzen lässt. Somit werden die spezifischen Vorteile eines SPAD-Lichtempfängers zugänglich, nämlich die große räumliche Ausdehnung mit sehr vielen SPAD-Zellen und trotzdem hoher Frequenzbandbreite zudem bei extrem hoher intrinsischer Verstärkung, während die spezifische Fremdlichtempfindlichkeit durch eine einfache bauliche Maßnahme mittels der Mehrfachblende kompensiert wird.

Die Blendenöffnungen bilden bevorzugt eine Zeilen- oder Matrixanordnung. Eine solche Blendenzeile oder Blendenmatrix eignet sich besonders für regelmäßige Anordnungen von Messstrahlen, mit denen ein Raster von Messpunkten im Überwachungsbereich erfasst wird.

Die Blende ist in einem Abstand zu dem Lichtempfänger angeordnet, der höchstens der fünffachen Ausdehnung eines SPAD-Lichtempfangselements oder einer Gruppe von SPAD-Lichtempfangselementen entspricht. Die Blende befindet sich also praktisch direkt vor dem SPAD-Lichtempfänger und ermöglicht so eine kurze Baulänge. Als Ausdehnung eines SPAD-Lichtempfangselements oder der Gruppe kann ein Maß wie dessen Höhe, Breite oder Diagonale herangezogen werden, oder auch der Pixelabstand (Pixel Pitch) zwischen zwei SPAD-Lichtempfangselementen oder -gruppen. Prinzipiell sind etwas großzügigere Abstände etwa bis zur zehnfachen Ausdehnung eines SPAD-Lichtempfangselements oder soweit herstellungstechnisch möglich auch noch kürzere Abstände denkbar.

Die Blendenöffnungen weisen bevorzugt eine sich verjüngende Form auf. Damit wird die Designfreiheit ausgenutzt und gezielt von rechteckigen oder kreisförmigen Blendenöffnungen abgewichen. Beispiele sind eine tropfenförmige Blendenöffnung, kleiner werdende, nebeneinander liegende Kreise oder eine Hauptöffnung mit einem seitlichen langgestreckten Ausläufer, der insbesondere keilförmig oder auch mit geschwungener Form schmaler wird. Die besondere Form der Blendenöffnung sorgt für eine bessere Nahbereichsempfindlichkeit. Denn insbesondere bei biaxialem Aufbau, also nebeneinander angeordnetem Lichtsender und Lichtempfänger, wandert die Beleuchtung in Abhängigkeit vom Objektabstand zur Seite. Die besonders geformte Blendenöffnung sorgt dafür, dass Lichtflecken nicht aus dem Empfindlichkeitsbereich auswandern, sowie im Nahbereich mit schmaler Blende und im Fernbereich mit großer Blende empfangen werden.

Vorzugsweise sind Einzelsignale von SPAD-Lichtempfangselementen hinter derselben Blendenöffnung zu einem Empfangssignal zusammengefasst. Das entspricht dem einleitend erläuterten gemeinsamen Auswerten mehrerer SPAD-Zellen und kann in Form eines analogen Zusammenfassens, aber auch einer digitalen gemeinsamen Auswertung geschehen. Die Zusammenfassung kann lediglich über Zeilen und Spalten erfolgen, also aus schaltungstechnischen Gründen auf rechteckige Bereiche beschränkt sein. Die Blendenöffnung ermöglicht dennoch eine andere geometrische Auswahl, wobei dann nur wenige unbeleuchtete SPAD-Lichtempfangselemente in einem die Blendenöffnung umschreibenden Rechteck effektiv ungenutzt bleiben.

Die Steuer- und Auswertungseinheit ist bevorzugt dafür ausgebildet, mittels der von einer jeweiligen Blendenöffnung erzeugten Lichtflecken mehrere Abstände zu mehreren Messpunkten in dem Überwachungsbereich zu bestimmen. In einem derartigen Mehrstrahlsystem werden jeweils die Lichtflecken auf den SPAD-Empfangselementen hinter einer jeweiligen Blendenöffnung ausgewertet, um so einen Abstandswert je Blendenöffnung zu gewinnen. Das kann nacheinander oder gleichzeitig geschehen, je nach Beleuchtung und Abfolge der Messung.

Der Lichtsender ist bevorzugt dafür ausgebildet, das moduliere Sendelicht als mindestens einen Sendelichtstrahl auszusenden. Anders als bei einer Flächenbeleuchtung mit entsprechenden Nachteilen für das Signal-Rausch-Verhältnis wird hierbei die Sendeenergie auf den jeweiligen Messpunkt gebündelt, oder im Falle mehrerer Sendelichtstrahlen auf mehrere Messpunkte.

Der Lichtsender ist bevorzugt dafür ausgebildet, mindestens einen Sendelichtstrahl in veränderte Richtungen auszusenden, so dass der von dem Sendelichtstrahl ausgeleuchtete Messpunkt im Überwachungsbereich von anderen SPAD-Lichtempfangselementen beobachtet wird. Der mindestens eine Sendelichtstrahl ist demnach scannend bewegt und tastet dadurch einen größeren Bereich ab. Dazu kann eine individuelle oder gekoppelte Ablenkung für mehrere oder alle Sendelichtstrahlen vorgesehen sein, um Sendelichtstrahlen einzeln, in Gruppen oder insgesamt in eine oder zwei laterale Richtungen abzulenken. Das Scanverfahren ist vorzugsweise nicht kontinuierlich, sondern entsprechend der Anordnung der Blendenöffnungen gerastert, d.h. die Sendelichtstrahlen wechseln diskret zwischen den Orten entsprechend der Blendenöffnungen.

Die Steuer- und Auswertungseinheit ist bevorzugt dafür ausgebildet, jeweils nur bestimmte SPAD-Lichtempfangselemente zu aktivieren oder auszulesen, insbesondere diejenigen, welche die jeweils von den Sendelichtstrahlen beleuchteten Messpunktebeobachten. Dadurch werden keine Empfangssignale von Lichtempfangselementen erzeugt oder ausgewertet, die zum jeweiligen Nutzsignal nicht beitragen können. Wie schon kurz erwähnt, können SPAD-Lichtempfangselemente dadurch inaktiv geschaltet werden, dass die Vorspannung unter die Durchbruchspannung abgesenkt wird. Sie verlieren dann um mehrere Größenordnungen an Empfindlichkeit und können deshalb als ausgeschaltet angesehen werden. Das Inaktivschalten hat auch den Vorteil, dass keine unnötigen Lawinen ausgelöst werden, die nur Stromaufnahme und Wärmeentwicklung beitragen. Es ist aber auch möglich, die nicht benötigten SPAD-Lichtempfangselemente aktiv zu lassen und lediglich deren Empfangssignal nicht auszulesen oder in der Auswertung nicht zu beachten. Eine Auswahl bestimmter SPAD-Lichtempfangselemente und damit Bereiche des Lichtempfängers kann man auch als elektronische Blende in Ergänzung der physischen oder optischen Blende der Empfangsoptik auffassen. Durch die Kombination der elektronischen Blende mit einer mechanischen Blende ist eine gegenseitige Ergänzung möglich, beispielsweise stört es dadurch nicht mehr, wenn eine elektronische Blende aufgrund von Zeilen- und Spaltenverschaltung rechteckig sein muss. Das ermöglicht eine Feinpositionierung beziehungsweise weitere Verformung oder Verkleinerung der jeweiligen Blendenöffnung.

Der Sensor ist bevorzugt als Laserscanner ausgebildet und weist eine drehbare Ablenkeinheit zur periodischen Abtastung des Überwachungsbereichs auf. Die drehbare Ablenkeinheit ist ein Drehspiegel, insbesondere Polygonspiegelrad, zur periodischen Strahlablenkung bei stationär angeordnetem Lichtsender und Lichtempfänger, oder alternativ eine mitdrehende Ablenkeinheit mit Lichtsender und Lichtempfänger. Im Gegensatz zu den einleitend genannten bekannten Laserscannern ist ein erfindungsgemäßer Laserscanner ein Mehrstrahlscanner, dessen mehrere Sendelichtstrahlen mit Pulsfolgen codiert sind.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittansicht eines entfernungsmessenden optoelektronischen Sensors;
- Fig. 2a-c: Draufsichten auf verschiedene Beispiele von Anordnungen von Blendenöffnungen einer Mehrfachblende;
- Fig. 3a-b: Draufsichten auf zwei Beispiele von Blendenöffnungen mit Anpassung für den Nahbereich;
- Fig. 4: eine Draufsicht auf eine Mehrfachblende mit für den Nahbereich angepassten Blendenöffnungen; und
- Fig. 5: eine schematische Darstellung eines Laserscanners.

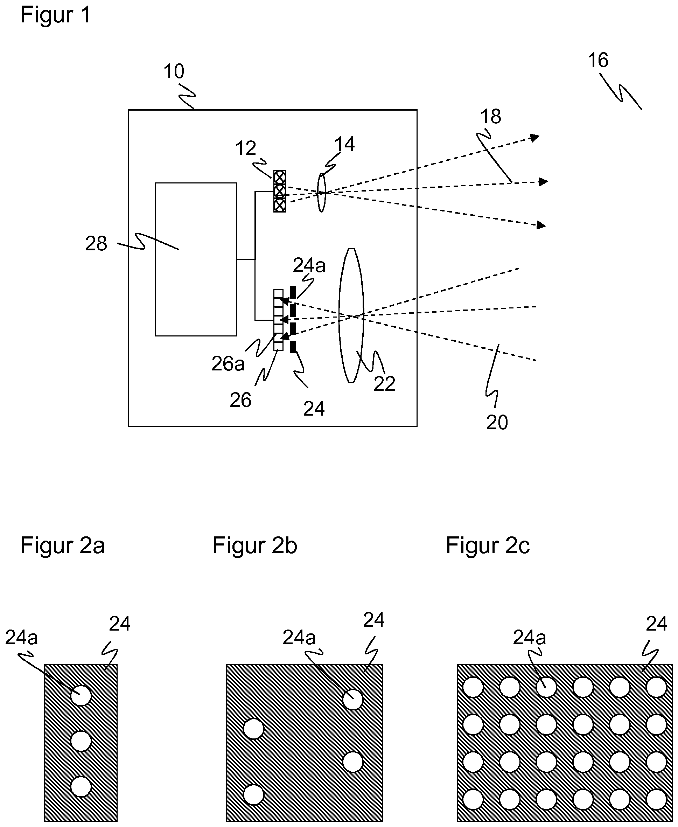

Figur 1 zeigt eine schematische Darstellung eines entfernungsmessenden optoelektronischen Sensors 10. Mit einem Lichtsender 12 wird moduliertes Sendelicht durch eine Sendeoptik 14 in einen Überwachungsbereich 16 ausgesandt. Der Lichtsender 12 ist in der Lage, das Sendelicht in einem oder mehreren punkt- oder linienförmigen Sendelichtstrahlen 18 zu bündeln. Damit kann die verfügbare Lichtleistung auf die tatsächlichen Messpunkte konzentriert werden, was im Gegensatz zu einer einfachen Flächenbeleuchtung das Signal-Rausch-Verhältnis erheblich verbessert.

Die Modulation der Sendelichtstrahlen 18 ist an das Lichtlaufzeitverfahren angepasst, mit dem der Sensor 10 Abstände misst. In Betracht kommt beispielsweise eine periodische Modulation, insbesondere Sinusmodulation, für ein Phasenverfahren, eine ein- oder mehrfach gepulste Modulation für ein Einzelpuls- oder Pulsmittelungsverfahren oder eine rauschähnliche Modulation mit einer Zufallscodefolge.

Es gibt auch zahlreiche Methoden, um die Richtung der Sendelichtstrahlen 18 und damit die Messpunkte im Überwachungsbereich 16 festzulegen oder in vorteilhaften Ausführungsformen scannerartig zu variieren. Ein Beispiel ist ein Array mit einer Vielzahl von einzeln oder gruppenweise ansteuerbaren Einzellichtsendern, beispielsweise ein VCSEL-Array oder eine Mehrfachanordnung anderer Lichtquellen, wie LEDs oder Kantenemitter-Laserdioden. Variable Richtungen lassen sich über Piezo-Aktoriken erzeugen, die auf die Lage des Lichtsenders 12 und/oder der Sendeoptik 14 einwirken, ebenso über ein Optical Phased Array oder zusätzliche optische Elemente wie MEMS-Spiegel, Drehspiegel, Drehprisma oder einen akusto-optischer Modulator. Eine bevorzugte Ausführungsform verwendet eine Flüssiglinse als Sendeoptik 14, in der die Grenzschicht zwischen zwei nicht mischbaren Medien durch Ansteuerung einer Elektrodenanordnung verkippt werden kann. Eine starre Schar von Sendelichtstrahlen 18 lässt sich über ein Mustererzeugungselement erzeugen, insbesondere ein DOE (diffraktives optisches Element), oder dies wird mit einer Bewegung nach einer der zuvor genannten Möglichkeiten überlagert, um doch zu scannen. Der Lichtsender 12 verwendet vorzugsweise eine Wellenlänge zwischen 200 nm und 2000 nm, insbesondere von 900 nm oder 1550 nm.

Treffen die Sendelichtstrahlen 18 nun in dem Überwachungsbereich 16 auf Objekte, so werden sie als remittierte Sendelichtstrahlen 20 zu dem Sensor 10 zurückgeworfen. Die remittierten Sendelichtstrahlen 20 gelangen durch eine Empfangsoptik 22 und eine Mehrfachblende 24 auf einen Lichtempfänger 26 mit einer Vielzahl von Pixeln in Form von SPAD-Lichtempfangselementen 26a. Ein Pixel kann auch von einer Gruppe von SPAD-Lichtempfangselementen gebildet sein. Die Empfangsoptik 22 ist wie schon die Sendeoptik 14 nur durch eine einfache Linse repräsentiert, die stellvertretend für beliebige Optiken mit mehrlinsigen Objektiven, weiteren Blenden und sonstigen optischen Elementen steht. Auch eine reflexive oder diffraktive Optik ist vorstellbar.

Die Mehrfachblende 24 weist mehrere Blendenöffnungen 24a auf. Das Funktionsprinzip der Mehrfachblende 24 kann absorbierend oder reflektierend sein. Sie befindet sich praktisch ohne Abstand oder jedenfalls mit sehr wenig Abstand vor dem Lichtempfänger 26. Der geringe Abstand sorgt dafür, dass der remittierte Sendelichtstrahl 20 zwischen Mehrfachblende 24 und Lichtempfänger 26 noch ein wenig aufgeweitet wird, aber dieser Abstand beträgt vorzugsweise höchstens die fünffache Größe der SPAD-Lichtempfangselemente 26a beziehungsweise der Pixel, die von Gruppen von Lichtempfangselementen 26a gebildet sind, oder anders ausgedrückt des Pixelabstands (Pixel Pitch). Die mechanische Blende kann dazu verwendet werden, mehrere remittierte Lichtstrahlen 20 gleichzeitig auf dem Lichtempfänger 26 zu detektieren und dabei den Fremdlichteinfall zu beschränken. Weitere Ausgestaltungsmöglichkeiten werden später noch unter Bezugnahme auf die Figuren 2 bis 4 erläutert.

Der Lichtempfänger 26 kann eine große Fläche und damit eine große Pixelzahl von SPAD-Lichtempfangselementen 26a aufweisen. Wahlweise ist der Lichtempfänger 26 mit analoger Kombination der Einzelsignale aller SPAD-Lichtempfangselemente 26a beziehungsweise gewisser Gruppen von SPAD-Lichtempfangselementen 26a oder mit digitaler Bereitstellung von Ereignissen, also durch Photonen oder auch Dunkelrauschen ausgelöster Lawinen, der einzelnen SPAD-Lichtempfangselemente 26a ausgebildet. Es ist denkbar, die Mehrfachblende 24 mit einer elektronischen Blende zu ergänzen, indem nur SPAD-Lichtempfangselemente 26a in bestimmten Bereichen aktiviert, ausgelesen oder ausgewertet werden.

Eine Steuer- und Auswertungseinheit 28 ist mit dem Lichtsender 12 und dem Lichtempfänger 26 verbunden. Damit werden jeweils gewünschte Modulationen der Sendelichtstrahlen 18 erzeugt. Die Empfangssignale der SPAD-Lichtempfangselemente 26a oder auch nur bestimmter SPAD-Lichtempfangselemente 26a, beispielsweise derjenigen, die den aktuell beleuchteten Messpunkt beobachten und die hinter einer dafür geeigneten Blendenöffnung 24a liegen, werden ausgewertet, um eine Lichtlaufzeit zu den Messpunkten der angetasteten Objekte in dem Überwachungsbereich 16 und daraus deren Abstand zu bestimmen. Ob auf analogem oder digitalem Weg werden vorzugsweise alle SPAD-Lichtempfangselemente 26a hinter einer gemeinsamen Blendenöffnung 24a zusammengefasst und gemeinsam ausgewertet. Schaltungseinschränkungen auf Spalten und Zeilen und resultierende Rechteckformen der Gruppen von zusammengefassten SPAD-Lichtempfangselementen 26a sind dabei unproblematisch, weil die Blendenöffnung 24a für die gewünschte Form sorgt und äußerstenfalls einige SPAD-Lichtempfangselemente 26a ohne größere Auswirkungen auf die Leistungsfähigkeit des Sensors 10 unbeleuchtet bleiben.

Für die Lichtlautzeitmessung wird das jeweilige Empfangssignal mit der bekannten periodische Modulation oder auch Zufallsfolge des zugehörigen Sendelichtstrahls 18 korreliert, um einen Phasenversatz zu bestimmen, oder es werden bei einem Pulsverfahren Empfangszeitpunkte bestimmt und mit Sendezeitpunkten verglichen. Zumindest Teile der Steuer- und Auswertungseinheit 28 können mit dem Lichtsender 12 beziehungsweise dem Lichtempfänger 26 auf einem gemeinsamen Baustein integriert werden, etwa eine Signalerzeugung für die Modulation der Sendelichtstrahlen 18 oder pixelbezogene Auswertungen und Korrelationen des Empfangssignals, insbesondere TDCs (Time-to-Digital-Converter) zur Bestimmung von Empfangszeitpunkten eines SPAD-Lichtempfangselements 26a.

Die Blendenöffnungen 24a verhindern nicht nur den Einfall von Fremdlicht aus bezüglich der jeweiligen Sichtrichtung falschen Winkeln, sondern zumindest weitgehend ein Übersprechen von Sendelichtstrahlen 18 in einen nicht der Richtung des Sendelichtstrahls 18 zugeordneten Bereich von SPAD-Lichtempfangselementen 26a insbesondere nach Mehrfachreflexionen. Dadurch wird die Messung besonders robust, und es ist möglich, mehrere Messpunkte simultan zu erfassen, um die Messgeschwindigkeit deutlich zu erhöhen. Um die einzelnen Sendestrahlen 18 noch sicherer voneinander zu unterscheiden, sind individuelle Codierungen der Sendelichtstrahlen 18 und/oder unterschiedliche Farben denkbar. So werden die Vorteile eines Laserscanners und einer 3D-Kamera kombiniert: Die Abstandswerte werden an mehreren Messpunkten erfasst, und zwar zugleich deutlich schneller als bei sequentieller Erfassung mit nur einem Sendelichtstrahl und dennoch mit Konzentration des Messlichts auf einen Messpunkt, anders als bei flächiger Beleuchtung und Aufnahme.

Der optische Grundaufbau des Sensors 10 mit biaxial nebeneinanderliegendem Lichtsender 12 und Lichtempfänger 26 ist nicht zwingend und durch jede an sich von einstrahligen optoelektronischen Sensoren bekannte Bauform ersetzbar. Ein Beispiel dafür ist eine koaxiale Anordnung mit oder ohne Strahlteiler.

Die Ausgestaltung des Sendelichts ist vorzugsweise nicht nur wie oben erläutert in der Modulation, sondern auch geometrisch an das Messprinzip angepasst. Im Beispiel der Figur 1 werden räumlich getrennte Sendelichtstrahlen 18 ausgesandt, die im Überwachungsbereich 16 Punkte beleuchten. Dies ist an die Beobachtung mit effektiv punktförmigen Blenden vor dem Lichtempfänger 26 angepasst. Alternativ könnte die Beleuchtung aber auch aus einem länglichen Lichtstrahl bestehen, der Linien im Überwachungsbereich 16 beleuchtet, oder es könnte für andere geometrische Messprinzipien eine flächige Beleuchtung genutzt werden.

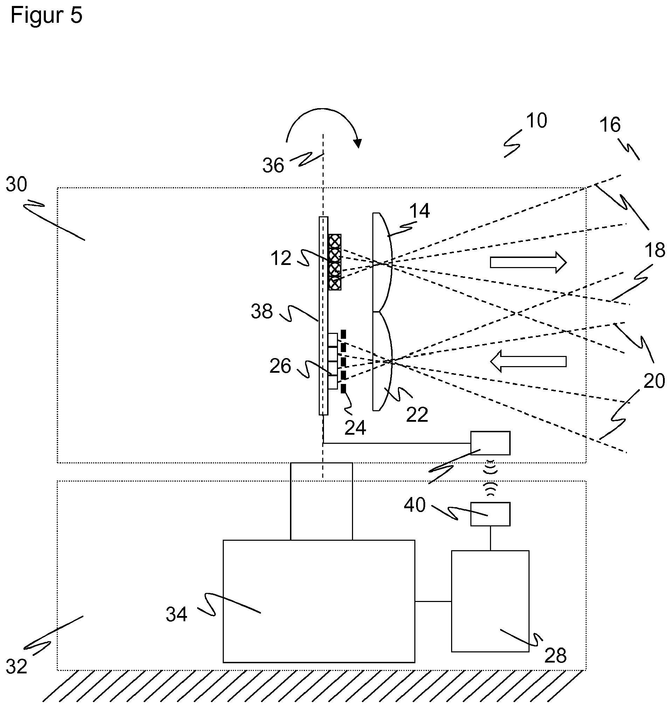

Mögliche Sensoren 10 sind Lichtschranken oder Lichttaster mit mehreren Strahlen, Lichtlaufzeitkameras oder auch ein Laserscanner, der später noch unter Bezugnahme auf Figur 5 genauer vorgestellt wird.

Die Figuren 2a-c zeigen verschiedene beispielhafte Anordnungen der Blendenöffnungen 24a in einer Draufsicht auf die Blende 24 aus Sicht der remittierten Lichtstrahlen 20. Regelmäßige Zeilen- oder Matrixanordnungen sind bevorzugt, weil sie ein regelmäßiges Raster von Messpunkten ermöglichen, das dann auch noch verschwenkt werden kann. Die Bereiche hinter den Blendenöffnungen 24a können durch Auswahl bestimmter aktivierter oder ausgewerteter SPAD-Lichtempfangselemente 26a nacheinander zur Messung herangezogen werden, und zwar vorzugsweise durch Auswahl von Spalten und Zeilen. Eine derartige hinzugenommene elektronische Blende ist auch dafür verwendbar, eine Feinpositionierung des erfassenden Bereichs zu erreichen oder diesen genutzten Bereich in seiner Fläche weiter zu verkleinern.

Bei scannenden Sendelichtstrahlen 18 erfolgt vorzugsweise die Scanbewegung sprunghaft oder diskret im Raster der Blendenöffnungen 24a. Das passt besonders gut zu einem Optical Phased Array, mit dem meist diskrete Winkelpositionen angefahren werden.

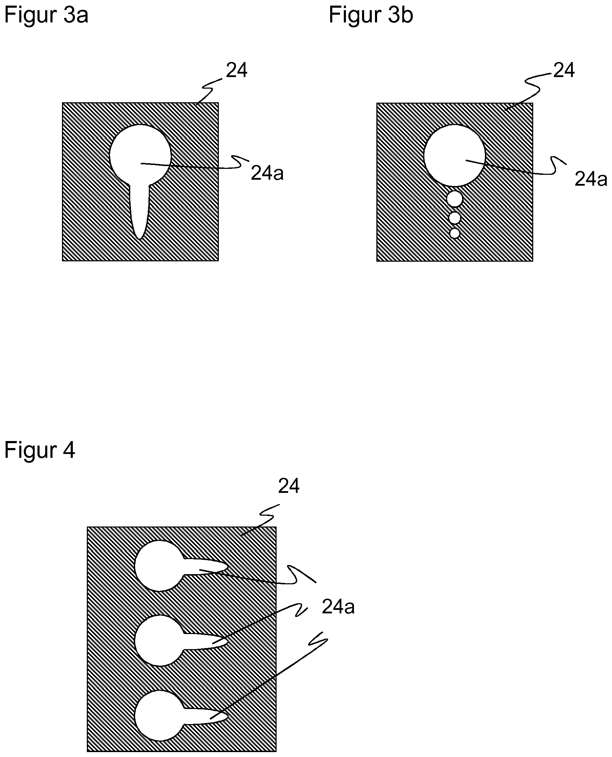

Figur 3a-b illustrieren erneut in der Draufsicht auf die Blende 24 zwei beispielhafte Blendenöffnungen 24a mit nicht rechteckiger und nicht kreisförmiger Geometrie. Mit derartigen Formen wird die Nahbereichs-Detektivität des Sensors 10 verbessert. Denn für große Objektentfernungen ist der Empfangslichtfleck auf dem Lichtempfänger 26 klein und an einer Sollposition. Für nahe Objekte wird der Empfangslichtfleck größer und verschiebt sich bei biaxialem Aufbau wie in Figur 1. Bei koaxialem Aufbau gibt es ein ganz ähnliches Problem mit ringförmig nach außen verschobenem Empfangslichtfleck. Jedenfalls verringert sich der Empfangspegel für nahe Objektentfernungen drastisch, wenn einfache rechteckige oder kreisförmige Blendenöffnungen 24a verwendet werden, weil die dann nur auf ferne Objekte ausgelegte Blendenöffnung 24a das an sich im Nahbereich sogar stärkere Empfangslicht weitestgehend abschirmt.

Die in den Figuren 3a-b gezeigten Formen reduzieren dieses Problem ganz erheblich, wobei diese Beispiele für den biaxialen Aufbau wie in Figur 1 ausgelegt sind und für einen koaxialen Aufbau angepasst werden müssten. Die Blendenöffnungen 24a weisen einen kleinen, aber langgestreckten Ausläufer auf, welcher dem bei naher Objektentfernung auswandernden Empfangslichtfleck folgt. Das kann auch als sich verjüngende Form bezeichnet werden. Bei großen Objektentfernungen wird möglichst alles Nutzlicht durchgelassen. Für die versetzten Empfangslichtflecke bei nahen Objektentfernungen wird hingegen ein definierter kleiner Teil des insgesamt im Nahbereich viel stärkeren Empfangslichts durchgelassen. Zur Klarstellung bilden die mehreren Kreise im Beispiel der Figur 3b den langgestreckten Ausläufer derselben Blendenöffnung 24a in einer herstellungstechnisch vorteilhaften Form, nicht etwa mehrere Blendenöffnungen 24a.

Figur 4 zeigt, wie solche zu Figur 3 erläuterten angepassten Formen der Blendenöffnungen 24a in einer Mehrfachblende 24 genutzt werden können. So werden die Vorteile einer Nahbereichsoptimierung für mehrere Messstrahlen zugänglich gemacht.

Figur 5 zeigt eine schematische Schnittdarstellung durch einen optoelektronischen Sensor 10 in einer weiteren Ausführungsform als mehrstrahliger Laserscanner. Der Sensor 10 umfasst in grober Aufteilung eine bewegliche Ablenkeinheit 30 und eine Sockeleinheit 32. Die Ablenkeinheit 30 ist der optische Messkopf, während in der Sockeleinheit 32 weitere Elemente wie eine Versorgung, Auswertungselektronik, Anschlüsse und dergleichen untergebracht sind. Im Betrieb wird mit Hilfe eines Antriebs 34 der Sockeleinheit 32 die Ablenkeinheit 30 in eine Drehbewegung um eine Drehachse 36 versetzt, um so einen Überwachungsbereich 16 periodisch abzutasten.

Die Ablenkeinheit 30 weist mindestens ein Abtastmodul auf, das im Prinzip so aufgebaut ist wie der zu Figur 1 erläuterte Sensor. Der Laserscanner bildet somit eine rotierende Plattform für ein solches mehrstrahliges System. Der konkret in Figur 5 gezeigte Aufbau des mitdrehenden Abtastmoduls ist rein beispielhaft, und es können auch mehrere Abtastmodule in verschiedenster Anordnung im Scanwinkel, im Elevationswinkel und in ihrer Drehung um ihre eigene Blickrichtung vorgesehen sein. Dadurch werden verschiedenste Strahlanordnungen und teilweise auch Überlagerungen von Scanbewegungen möglich, mit denen Messpunkte in dem Überwachungsbereich 16 erfasst beziehungsweise gescannt werden.

Lichtsender 12 und Lichtempfänger 26 sind in dieser Ausführungsform gemeinsam auf einer Leiterkarte 38 angeordnet, die auf der Drehachse 36 liegt und mit der Welle des Antriebs 34 verbunden ist. Dies ist nur beispielhaft zu verstehen, es sind praktisch beliebige Anzahlen und Anordnungen von Leiterkarten denkbar.

Eine berührungslose Versorgungs- und Datenschnittstelle 40 verbindet die bewegliche Ablenkeinheit 30 mit der ruhenden Sockeleinheit 32. Dort befindet sich die Steuer- und Auswertungseinheit 28, die zumindest teilweise auch auf der Leiterkarte 38 oder an anderem Ort in der Ablenkeinheit 30 untergebracht sein kann. Die Steuer- und Auswertungseinheit 28 steuert neben den schon erläuterten Funktionen auch den Antrieb 34 und erhält das Signal einer nicht gezeigten, von Laserscannern allgemein bekannten Winkelmesseinheit, welche die jeweilige Winkelstellung der Ablenkeinheit 30 bestimmt.

Damit wird während eines Umlaufs mit jedem Sendelichtstrahl 18 eine Ebene abgetastet, wobei Messpunkte in Polarkoordinaten aus der Winkelstellung der Ablenkeinheit 30 und dem mittels Lichtlaufzeit gemessen Abstand erzeugt werden. Genaugenommen wird nur bei einem Elevationswinkel von 0°, also einem in Figur 5 nicht vorhandenen horizontalen Sendelichtstrahl 18, tatsächlich eine Ebene abgetastet. Andere Sendelichtstrahlen 18 mit endlicher Elevation tasten jeweils die Mantelfläche eines Kegels ab, der je nach Elevationswinkel unterschiedlich spitz ausgebildet ist. Bei mehreren Sendelichtstrahlen 18, die in unterschiedlichen Winkeln nach oben und unten abgelenkt werden, entsteht insgesamt als Abtastgebilde eine Art Schachtelung von mehreren Sanduhren. Durch eine denkbare weitere Bewegung der Sendelichtstrahlen 18 schon innerhalb des Abtastmoduls oder eine Elevationsbewegung der Ablenkeinheit 30 wird das Abtastgebilde noch komplexer und kann so für eine in Ausdehnung und lokaler Abtastdichte gewünschte Erfassung des räumlichen Überwachungsbereichs 16 angepasst werden.

Der dargestellte Sensor 10 ist ein Laserscanner mit rotierendem Messkopf, nämlich der Ablenkeinheit 30. Alternativ ist auch eine periodische Ablenkung mittels Drehspiegel oder einem Facettenspiegelrad denkbar. Eine weitere alternative Ausführungsform schwenkt die Ablenkeinheit 30 hin und her, entweder anstelle der Drehbewegung oder zusätzlich um eine zweite Achse senkrecht zur Drehbewegung, um auch in Elevation eine Abtastbewegung zu erzeugen.

## Patentansprüche

1. Optoelektronischer Sensor (10) zur Erfassung und Abstandsbestimmung von Objekten in einem Überwachungsbereich (16), der einen Lichtsender (12) zum Aussenden von moduliertem Sendelicht (18), einen Lichtempfänger (26) mit einer Vielzahl von SPAD-Lichtempfangselementen (26a) zum Erzeugen mindestens eines Empfangssignals aus dem von Objekten in dem Überwachungsbereich (16) remittierten Sendelicht (20), eine dem Lichtempfänger (26) vorgeordnete Empfangsoptik (22) mit einer Blende (24) sowie eine Steuer- und Auswertungseinheit (28) aufweist, die dafür ausgebildet ist, aus Eigenschaften des Empfangssignals und des modulierten Sendelichts (18) eine Lichtlaufzeit und daraus einen Abstandswert zu bestimmen,
**dadurch gekennzeichnet,**
**dass** die Blende (24) mehrere voneinander beabstandete Blendenöffnungen (24a) aufweist.

2. Sensor (10) nach Anspruch 1,
wobei die Blendenöffnungen (24a) eine Zeilen- oder Matrixanordnung bilden.

3. Sensor (10) nach Anspruch 1 oder 2,
wobei die Blende (24) in einem Abstand zu dem Lichtempfänger (26) angeordnet ist, der höchstens der fünffachen Ausdehnung eines SPAD-Lichtempfangselements (26a) oder Gruppe von Lichtempfangselementen (26a) entspricht.

4. Sensor (10) nach einem der vorhergehenden Ansprüche,
wobei die Blendenöffnungen (24a) eine sich verjüngende Form aufweisen.

5. Sensor (10) nach einem der vorhergehenden Ansprüche,
wobei Einzelsignale von SPAD-Lichtempfangselementen (26a) hinter derselben Blendenöffnung (24a) zu einem Empfangssignal zusammengefasst sind.

6. Sensor (10) nach einem der vorhergehenden Ansprüche,
wobei die Steuer- und Auswertungseinheit (28) dafür ausgebildet ist, mittels der von einer jeweiligen Blendenöffnung (24a) erzeugten Lichtflecken mehrere Abstände zu mehreren Messpunkten in dem Überwachungsbereich (16) zu bestimmen.

7. Sensor (10) nach einem der vorhergehenden Ansprüche,
wobei der Lichtsender (12) dafür ausgebildet ist, das moduliere Sendelicht als mindestens einen Sendelichtstrahl (18) auszusenden.

8. Sensor (10) nach einem der vorhergehenden Ansprüche,
wobei der Lichtsender (12) dafür ausgebildet ist, mindestens einen Sendelichtstrahl (18) in veränderte Richtungen auszusenden, so dass der von dem Sendelichtstrahl (18) ausgeleuchtete Messpunkt im Überwachungsbereich (16) von anderen SPAD-Lichtempfangselementen (26a) beobachtet wird.

9. Sensor (10) nach einem der vorhergehenden Ansprüche,
wobei die Steuer- und Auswertungseinheit (28) dafür ausgebildet ist, jeweils nur bestimmte SPAD-Lichtempfangselemente (26a) zu aktivieren oder auszulesen, insbesondere diejenigen, welche die jeweils von den Sendelichtstrahlen (18) beleuchteten Messpunkte beobachten.

10. Sensor (10) nach einem der vorhergehenden Ansprüche,
der als Laserscanner ausgebildet ist und eine drehbare Ablenkeinheit (30) zur periodischen Abtastung des Überwachungsbereichs (16) aufweist.

11. Verfahren zur Erfassung und Abstandsbestimmung von Objekten in einem Überwachungsbereich (16), bei dem moduliertes Sendelicht (18) in den Überwachungsbereich (16) ausgesandt, von einer Vielzahl von SPAD-Lichtempfangselementen (26a) mindestens ein Empfangssignal aus dem von Objekten in dem Überwachungsbereich (16) remittierten Sendelicht (20) erzeugt und aus Eigenschaften des Empfangssignals und des modulierten Sendelichts (18) eine Lichtlaufzeit und daraus ein Abstandswert bestimmt wird, wobei das remittierte Sendelicht (20) mittels einer dem Lichtempfänger (26) vorgeordneten Empfangsoptik (22) mit einer Blende (24) auf die SPAD-Lichtempfangselemente (26a) geleitet wird
**dadurch gekennzeichnet,**
**dass** die Blende (24) das remittierte Empfangslicht durch mehrere voneinander beabstandete Blendenöffnungen (24a) auf voneinander räumlich getrennte Teilbereiche des Lichtempfängers (26) leitet.
